(19) **Europäisches Patentamt / European Patent Office / Office européen des brevets**

(11) **EP 1 807 912 B1**

(12) **FASCICULE DE BREVET EUROPEEN**

(45) Date de publication et mention
de la délivrance du brevet:
**11.09.2013 Bulletin 2013/37**

(21) Numéro de dépôt: **05803462.0**

(22) Date de dépôt: **26.10.2005**

(51) Int Cl.:
*H01S 3/042* *(2006.01)*   *H01S 3/23* *(2006.01)*

(86) Numéro de dépôt international:
**PCT/EP2005/055573**

(87) Numéro de publication internationale:
**WO 2006/063901 (22.06.2006 Gazette 2006/25)**

(54) **DISPOSITIF D'AMPLIFICATION LASER A HAUTE ENERGIE ET A HAUTE QUALITE DE FAISCEAU**

EINRICHTUNG ZUM VERSTÄRKEN EINES LASERS MIT HOHER ENERGIE UND HOHER STRAHLQUALITÄT

DEVICE FOR AMPLIFYING A LASER WITH HIGH ENERGY AND HIGH BEAM QUALITY

(84) Etats contractants désignés:
**DE FR GB**

(30) Priorité: **05.11.2004 FR 0411815**

(43) Date de publication de la demande:
**18.07.2007 Bulletin 2007/29**

(73) Titulaire: **THALES**
**92200 Neuilly sur Seine (FR)**

(72) Inventeurs:
- **FALCOZ, Franck**
  **F-91410 DOURDAN (FR)**
- **MORO, Vincent**
  **F-91170 VIRY CHATILLON (FR)**
- **MARQUIS, Emmanuel**
  **F-78830 BULLION (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
FR-A- 2 840 461   US-A- 3 487 330
US-A- 3 611 190   US-A- 4 445 217
US-A- 4 803 439   US-A- 5 272 710
US-A- 5 636 239   US-A- 6 009 114

- DAWES J M ET AL: "Q-switching of a diode-pumped Nd:YAG laser with low uniform gain characteristics" OPTICS COMMUNICATIONS, NORTH-HOLLAND PUBLISHING CO. AMSTERDAM, NL, vol. 115, no. 5, 1 avril 1995 (1995-04-01), pages 617-625, XP000491214 ISSN: 0030-4018
- WEBER R ET AL: "COOLING SCHEMES FOR LONGITUDINALLY DIODE LASER-PUMPED ND: YAG RODS" IEEE JOURNAL OF QUANTUM ELECTRONICS, IEEE SERVICE CENTER, PISCATAWAY, NJ, US, vol. 34, no. 6, juin 1998 (1998-06), pages 1046-1053, XP000765507 ISSN: 0018-9197
- BIBEAU C ET AL: "High-average-power 1-[mu]m performance and frequency conversion of a diode-end-pumped Yb:YAG laser" IEEE Journal of Quantum Electronics IEEE USA, vol. 34, no. 10, octobre 1998 (1998-10), pages 2010-2019, XP011052036 ISSN: 0018-9197
- HOFFSTAEDT A: "Design and performance of a high-average-power flashlamp-pumped Ti: sapphire laser and amplifier" IEEE Journal of Quantum Electronics IEEE USA, vol. 33, no. 10, octobre 1997 (1997-10), pages 1850-1863, XP011051743 ISSN: 0018-9197

EP 1 807 912 B1

**Description**

Le domaine de l'invention est celui des amplificateurs de faisceau laser à haute énergie et des dispositifs de pompage optique associés.

La montée en énergie et en puissance moyenne des lasers pulsés à haute puissance crête, de type Saphir dopé au Titane conduit à l'utilisation de cristaux amplificateurs de grand diamètre nécessitant des énergies de pompage optique pouvant dépasser 100 joules par tir laser. Les puissances crête de ces lasers sont généralement comprises entre le térawatt et le pétawatt

Cette montée en énergie entraîne une augmentation sensible des puissances moyennes des lasers de pompe qui a pour conséquence des effets thermiques importants sur les milieux amplificateurs. D'une part, les variations d'indice optique dues aux effets thermiques perturbent la propagation du faisceau laser amplifié, le milieu amplificateur se .comportant alors comme une lentille de forme complexe. Ces effets sont d'autant plus sensibles que le faisceau amplifié traverse généralement le milieu amplificateur plusieurs fois, se dégradant ainsi à chaque passage. D'autre part, les dilatations engendrées induisent des contraintes mécaniques sur le milieu amplificateur. Enfin, l'effet laser transverse qui se produit spontanément lorsque les niveaux d'énergie sont suffisants est renforcé. Or, cet effet diminue considérablement le gain de l'amplificateur. Il est donc nécessaire de maîtriser ces effets parasites pour obtenir un fonctionnement correct de la chaîne laser.

Une technique connue pour lutter contre .ces effets est l'utilisation d'un refroidissement cryogénique. En effet, certains matériaux dont les cristaux de Saphir dopé Titane ont une conductivité thermique qui augmente lorsque la température diminue, ce qui induit une forte diminution des effets thermiques dans le cristal amplificateur {Liquid Nitrogen Cooled Ti/Sa Laser, Schulz, IEEE Journal of Quantum Electronics, April 1991, Vol 27, N°4]. Néanmoins, cette technique est particulièrement onéreuse dans la mesure où elle nécessite un matériel important comportant notamment des doigts cryogéniques, des compresseurs et des pompes à vide.

Elle présente également plusieurs inconvénients importants :

- L'utilisation de températures très basses pose des problèmes de condensation ;
- Ce type de refroidissement, généralement basé sur un cycle de compression-détente gazeux, est générateur de vibrations importantes qui nuisent à la stabilité du laser ;
- Les systèmes de maintien du cristal sur le doigt cryogénique peuvent engendrer des contraintes mécaniques importantes. Ces contraintes sont à l'origine d'aberrations thermomécaniques supplémentaires ;
- Pour des raisons mécaniques, les cristaux soumis aux températures cryogéniques sont souvent parallélépipédiques, ce qui entraîne l'apparition de sous cavités entre les faces opposées des cristaux, favorisant ainsi l'effet laser transverse.

L'objet de l'invention est d'utiliser une configuration d'amplificateur et un moyen de refroidissement qui ne présentent pas les inconvénients des systèmes cryogéniques et qui permettent cependant d'obtenir à la fois une grande qualité de faisceau laser amplifié et des effets laser transverse minimisés.

Un dispositif d'amplification de faisceau laser selon l'invention combine 4 grands principes qui sont :

- Utilisation d'un cristal à symétrie circulaire afin de distribuer les contraintes radialement ;
- Refroidissement de toute la surface externe par un liquide de refroidissement, afin d'éviter l'emploi des techniques cryogéniques ;
- Utilisation de faisceaux laser de pompe à répartition d'énergie uniforrne ;
- Utilisation d'un liquide d'adaptation afin d'éviter les phénomènes d'émission laser transverse.

Cette configuration présente également l'avantage de pouvoir être utilisée à température ambiante.

Plus précisément, l'invention a pour objet un dispositif d'amplification de faisceau laser selon la revendication 1.

Avantageusement, les moyens de refroidissement de l'amplificateur comprennent une enceinte mécanique entourant le cristal, un liquide de refroidissement disposé entre le cristal et l'enceinte mécanique de façon que l'intégralité de la surface cylindrique baigne dans le liquide de refroidissement et des moyens permettant la circulation dudit liquide de refroidissement dans l'enceinte mécanique.

L'indice optique du liquide de refroidissement est voisin de celui du cristal, de façon à réaliser une adaptation d'indice entre le liquide de refroidissement et le cristal. A titre d'exemple, le liquide de refroidissement peut être de l'eau mélangée à un additif, de type éthylèneglycol ou tout autre polymère d'indice adapté.

Avantageusement, le cristal est à base de Titane et de Saphir.

L'invention sera mieux comprise et d'autres avantages apparaîtront à la lecture de la description qui va suivre donnée à titre non limitatif et grâce aux figures annexées parmi lesquelles :

- la figure 1 représente le schéma de principe d'un dispositif d'amplification de faisceau laser ;
- les figures 2 et 3 représentent deux vue en coupe d'un amplificateur selon l'invention ;
- la figure 4 représente une vue tridimensionnelle de l'amplificateur selon l'invention ;
- les figures 5 et 6 représentent la variation d'énergie absorbée par le cristal amplificateur le long de son axe ;
- les figures 7 et 8 représentent l'effet de l'adaptation d'indice sur l'effet laser transverse ;

- les figures 9, 10 et 11 représentent respectivement un premier profil de répartition d'énergie du faisceau laser de pompe selon l'invention, le gradient de température engendrée dans le cristal amplificateur et la variation de phase correspondante sur le faisceau laser d'émission ;
- les figures 12, 13 et 14 représentent respectivement un second profil de répartition d'énergie du faisceau laser de pompe, le gradient de température engendrée dans le cristal amplificateur et la variation de phase correspondante sur le faisceau laser d'émission.

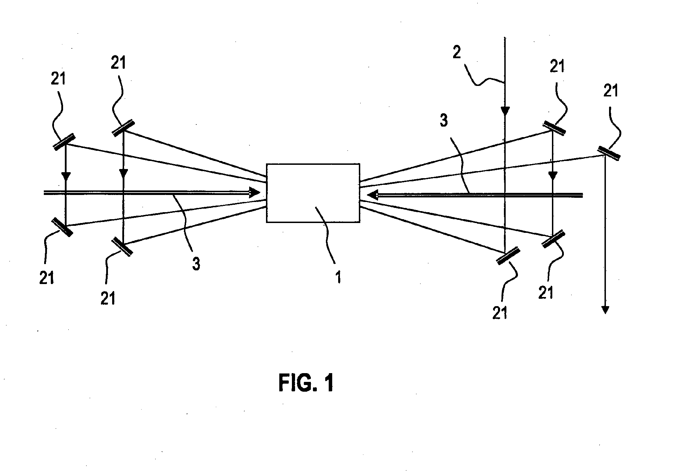

Le principe général de fonctionnement d'un dispositif d'amplification de faisceau laser est illustré en figure 1. Il comprend principalement un amplificateur de faisceau laser 1 et des faisceaux laser de pompage optique 3. Les faisceaux 3 injectent dans le cristal de l'amplificateur de l'énergie optique. La source laser à l'origine des faisceaux de pompage n'est pas représentée sur la figure. Le faisceau laser 2 traverse le cristal de l'amplificateur plusieurs fois au moyen de dispositifs optiques à miroirs 21. A chaque passage, il est amplifié dans le cristal. Généralement, le nombre de passage est compris entre 2 et 4. On améliore ainsi l'extraction de l'énergie apportée par les faisceaux de pompe 3.

L'énergie de sortie $E_{OUT}$ du faisceau laser en sortie de l'amplificateur est donnée par l'équation de Frantz et Nodvik. Elle vaut :

$$E_{OUT} = J_{SAT}.S.\ln\left[\frac{J_{STO}}{J_{SAT}}.\left(e^{\frac{E_{IN}}{S.J_{SAT}}} - 1\right) + 1\right]$$

avec :

$E_{IN}$ : Energie d'entrée avant amplification ;
$J_{STO}$ : Fluence stockée disponible pour le gain d'amplification ;
$J_{SAT}$ : Fluence de saturation ;
S : Surface du faisceau laser.

On a également :

$J_{IN}$ : Fluence d'entrée avant amplification avec

$$J_{IN} = \frac{E_{IN}}{S} \ ;$$

Dans le cas où $J_{IN}$ est très inférieur à $J_{SAT}$, l'équation précédente se simplifie. Dans ce cas, la valeur du gain d'amplification G qui est égal au rapport de l'énergie de sortie $E_{OUT}$ sur l'énergie d'entrée avant amplification $E_{IN}$ vaut :

$$G = e^{\frac{J_{STO}}{J_{SAT}}}$$

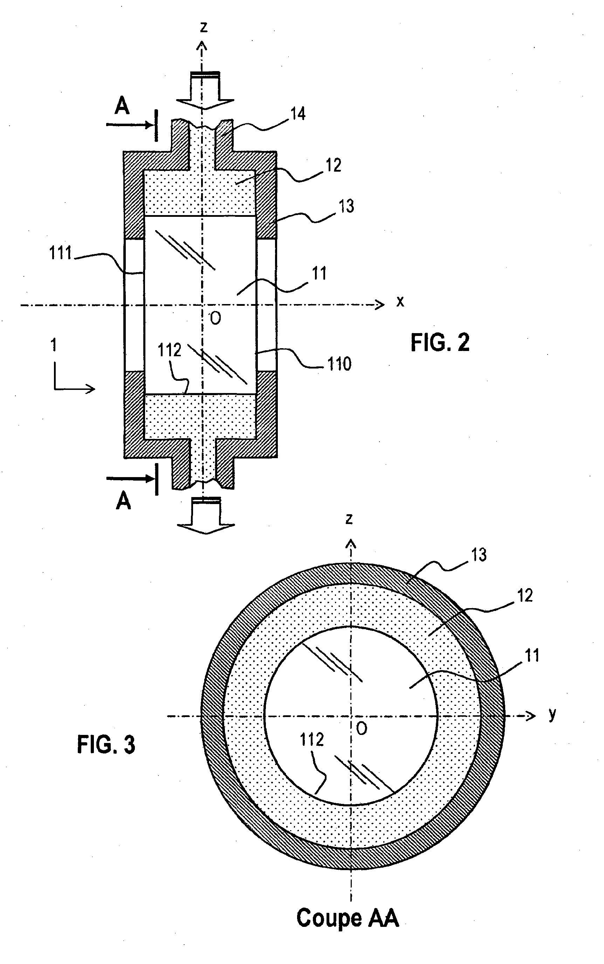

A titre d'exemple non limitatif, les figures 2 et 3 représentent un amplificateur laser selon l'invention. L'amplificateur est référencé dans un repère orthonormé (O, x, y, z) commun à toutes les figures. La figure 2 représente une première vue en coupe dans un plan (O, x, z) et la figure 3 une seconde vue en coupe dans un plan perpendiculaire (O, y, z).

Il comprend principalement :

- un cristal amplificateur 11 ayant la forme d'un cylindre droit comprenant une face d'entrée 110 et une face de sortie 111 de forme circulaire et une surface cylindrique 112 reliant lesdites faces 110 et 111, le faisceau laser amplifié circulant entre lesdites faces ;
- une enceinte mécanique 13 entourant le cristal 11. Comme on peut le voir sur la figure 2, l'enceinte mécanique doit être configurée de façon que les faces d'entrée et de sortie 110 et 111 du cristal amplificateur soient laissées substantiellement libres de façon que le diamètre d'un faisceau laser traversant le cristal puisse être le plus grand possible ;
- un liquide de refroidissement 12 disposé entre le cristal 11 et l'enceinte mécanique 13 de façon que l'intégralité de la surface cylindrique 112 baigne dans le liquide de refroidissement comme on le voit sur les figures 2 et 3 ;
- des moyens 14 permettant la circulation dudit liquide de refroidissement dans l'enceinte mécanique. La circulation du liquide est symbolisée sur la figure 2 par deux flèches pleines barrées.

Le matériau du cristal amplificateur est un matériau apte au pompage optique. Typiquement, il est constitué de Titane et de Saphir.

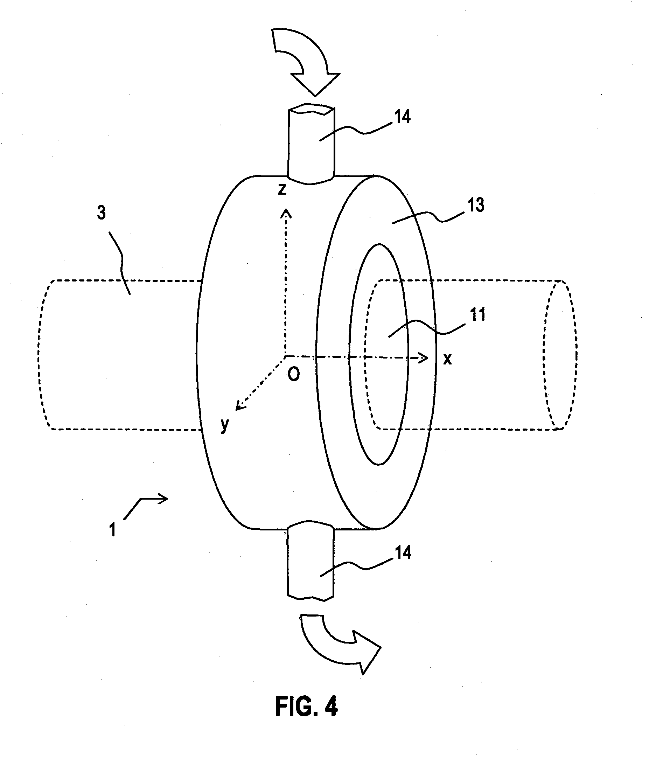

La figure 4 représente un dispositif d'amplification de faisceau laser comprenant au moins un amplificateur 1 selon l'invention. Le dispositif comprend essentiellement :

- un amplificateur 1 comprenant comme précédemment un cristal amplificateur 11, une enceinte mécanique 13 et un liquide de refroidissement 12 ;
- des moyens de génération de faisceaux laser de pompe 2.

Seuls les faisceaux de pompe 2 sont représentés en pointillés sur la figure 4.

Le pompage du cristal est réalisé de façon longitudinale, c'est-à-dire que la propagation des faisceaux de pompe se fait dans une direction sensiblement parallèle à la génératrice du cylindre constituant le cristal. Bien entendu, le faisceau de pompe a une forme circulaire pour être bien adapté à la forme du cristal. De plus, la répartition d'énergie à l'intérieur du faisceau laser de pompe est constante.

Ces différentes dispositions permettent de diminuer sensiblement les principaux inconvénients liées à l'utilisation de faisceaux de pompe à grande énergie. Ces inconvénients sont principalement :

- Apparition d'effets laser transverse ;
- Dégradations de la qualité du faisceau laser amplifié ;
- Apparitions de contraintes mécaniques sur le cristal.

En théorie, l'effet laser apparaît spontanément entre deux zones de la surface ou du pourtour reliant les faces d'entrée et de sortie du cristal lorsque la condition suivante est réalisée :

$$G_T.R_T > 1$$

Avec $G_T$ gain transverse du cristal amplificateur et $R_T$ coefficient de réflexion optique à l'interface séparant le pourtour du cristal de l'extérieur.

En pratique, l'effet laser transverse apparaît pour :

$$G_T.R_T > 0.2$$

On démontre que $G_T$ vaut :

$$G_T = e^{g_o . \phi_P}$$

Avec : $g_o$ gain linéique du cristal amplificateur et $\phi_P$ diamètre du faisceau laser de pompe. $g_o$ vaut également :

$$g_o = \frac{J_{STO}}{l.J_{SAT}} = \frac{E_{STO}}{l.S.J_{SAT}}$$

Avec $E_{STO}$ énergie stockée disponible pour le gain d'amplification et S surface du faisceau laser de pompe.

On démontre encore que :

$$E_{STO} = E_{PUMP}.\alpha.l.\frac{\lambda_{pump}}{\lambda_{laser}}$$

avec $Ep_{UMP}$ énergie apportée par le laser de pompe, $\alpha$ coefficient d'absorption linéique du faisceau de pompe, l longueur du cristal pompé, $\lambda_{PUMP}$ et $\lambda_{LASER}$ longueurs

d'onde du faisceau laser de pompe et du faisceau laser amplifié, le rapport de ces longueurs d'onde correspond au rendement quantique du cristal amplificateur. Par exemple, pour un cristal en Saphir dopé au Titane dont le faisceau de pompe est à une longueur d'onde $\lambda_{PUMP}$ de 532 nanomètres et le faisceau laser amplifié est à une longueur d'onde $\lambda_{LASER}$ de 800 nanomètres, le rendement quantique vaut 0.665.

L'énergie stockée $E_{STO}$ ne l'est pas uniformément le long du cristal. On démontre que la variation d'énergie absorbée $E_{ABS}(x)$ le long du cristal dans la direction Ox vaut :

$$E_{ABS}(x) = \left( 1 - e^{-\alpha.x} \right)$$

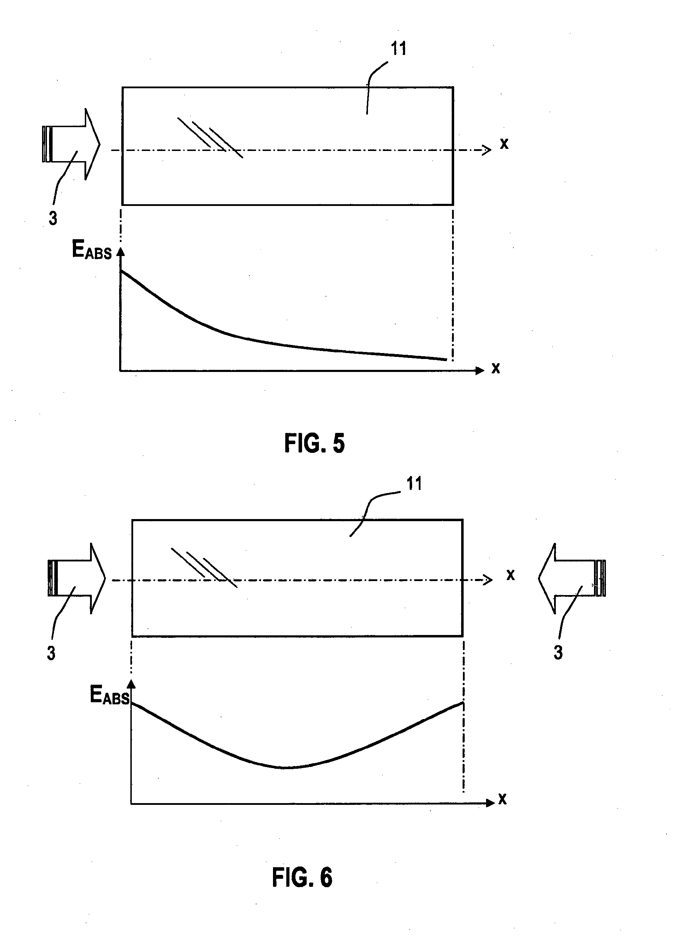

Les figures 5 et 6 représentent la variation de l'énergie absorbée $E_{ABS}$. Sur la figure 5, un seul faisceau de pompe traverse le cristal. Dans ce cas, la répartition d'énergie absorbée diminue constamment d'une extrémité à l'autre du cristal. Sur la figure 6, deux faisceaux de pompe opposés traversent le cristal. Dans ce cas, bien entendu, la répartition d'énergie absorbée est symétrique et les variations d'énergie sont atténuées. Cependant, les extrémités du cristal contiennent encore plus d'énergie absorbée que sa partie centrale. Par conséquent, le gain transverse $G_T$ est plus important aux extrémités du cristal qu'en son centre, favorisant ainsi les effets lasers transverses dans les parties extrêmes du cristal, près des faces d'entrée et de sortie.

Classiquement, $R_T$ vaut :

$$R_T = \left[ \frac{\Delta n}{\Sigma n} \right]^2$$

avec

$\Delta n$ : différence d'indices optiques entre le cristal et l'extérieur
$\Sigma n$ : Somme des indices optiques du cristal et de l'extérieur

Pour minimiser l'effet laser transverse, il est donc nécessaire de diminuer $R_T$. Il est ; par exemple, possible de dépolir le pourtour du cristal pour diminuer le coefficient de réflexion [Suppression of parasitic lasing in large aperture Ti :Sapphire laser amplifiers, Patterson, Bonlie,Price & White, Optics letters, July 15,99, Vol 24, N°14]. Ainsi, dans le cas d'un cristal de Saphir dopé au Titane, le coefficient de réflexion à l'interface cristal-air n'est plus que de 1.1% lorsque le cristal est dépoli alors qu'il est de 7.5% lorsque le cristal est poli.

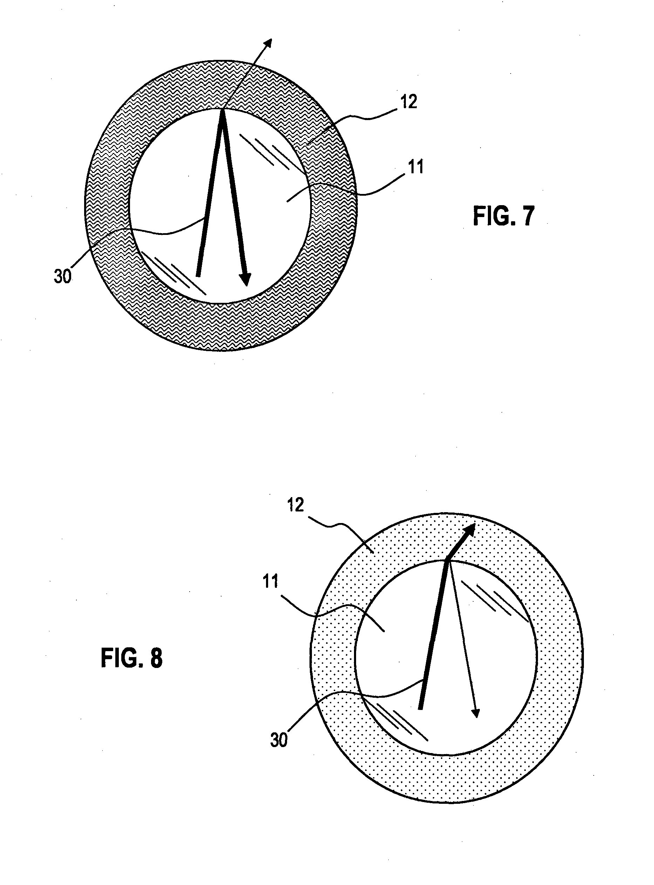

On peut également diminuer $R_T$ en réalisant une adaptation d'indice optique entre le cristal et la matière qui l'entoure. Les figures 7 et 8 illustrent ce principe.

Dans le cas de la figure 7, l'indice optique du milieu 12 entourant le cristal 11 est très différent de celui du cristal, la réflexion du rayon lumineux 30 symbolisé par une flèche sur la paroi du cristal est importante, l'effet laser transverse peut se produire. Dans le cas de la figure 8, l'indice optique du milieu 12 entourant le cristal 11 est voisin de celui du cristal, la réflexion du rayon lumineux 30 sur la paroi du cristal est faible, l'effet laser transverse ne peut pas se produire. En pratique, il est possible d'utiliser des polymères solides d'indice optique proches de celui du cristal. On obtient ainsi de très bonnes adaptations d'indice, le coefficient de réflexion n'étant plus que de 0.05% avec un polymère d'indice 1.68 entourant un cristal de Saphir dopé Titane dont l'indice optique est voisin de 1.76 à la longueur d'onde d'utilisation. Malheureusement, cette solution n'est pas favorable thermiquement, car les polymères utilisés sont de mauvais conducteurs de la chaleur.

Une autre façon d'aborder le problème de minimiser l'effet laser transverse consiste à modifier la forme au moins de l'une des extrémités du cristal pour que les ondes parasites réfléchies par son parois en sortent avant qu'ils n'éprouvent un gain suffisant à l'oscillation [*High-average power 1-$\mu m$ performance and frequency conversion of a diode-end-pumped Yb:YAG laser,* Camille Bibeau et al, IEEE Journal of Quantum Electronics, Vol. 34, No. 10, October 1998].

Dans les dispositifs selon l'invention, il est aisé de réaliser l'adaptation d'indice en utilisant un liquide de refroidissement dont l'indice optique est voisin de celui du cristal d'amplification. Ainsi, dans le cas d'un cristal de Saphir dopé au Titane, si on utilise de l'eau comme liquide de refroidissement dont l'indice optique vaut environ 1.3, le coefficient $R_T$ est de 2.3% lorsque le cristal est poli et de 0.3% si le cristal est dépoli. On peut encore le diminuer en utilisant de l'eau comportant un additif comme l'éthylène-glycol, l'indice optique du mélange est alors de 1.4 et le coefficient $R_T$ n'est plus que de 1.3% lorsque le cristal est poli et de 0.2% si le cristal est dépoli.

De plus, on a vu que l'effet laser transverse est favorisé aux extrémités du cristal. Il est donc important que les extrémités du cristal baignent dans le liquide de refroidissement qui assure l'adaptation d'indice optique.

La qualité du faisceau laser amplifié dépend essentiellement de la qualité du faisceau de pompe qui ne doit pas induire de gradient thermique à l'intérieur du cristal amplificateur susceptible de perturber le front d'onde du faisceau laser amplifié. Elle est caractérisé par son rapport de Strehl. On estime généralement qu'un faisceau de bonne qualité doit avoir un rapport de Strehl supérieur à 0.9.

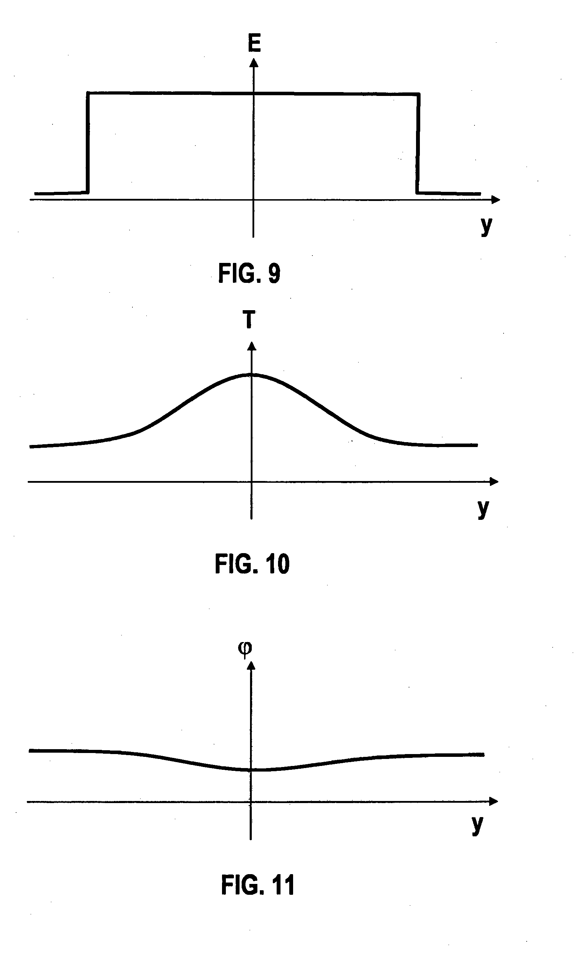

Dans le cas d'un cristal cylindrique pompé dans l'axe, le profil de la répartition d'énergie E du faisceau de pompe doit être constant comme indiqué sur la figure 9 qui montre la répartition de l'énergie E selon un axe y perpendiculaire à la direction de propagation du faisceau de pompe. On dit alors que les faisceaux laser sont de type « Flat top ». Le dépôt thermique dans le cristal est alors homogène et conduit à l'existence d'un profil de température parabolique comme indiqué sur la figure 10 qui représente la variation de température T à l'intérieur du cristal selon un axe y perpendiculaire à l'axe de symétrie du cristal. Typiquement, les variations de température sont d'une dizaine de degrés avec des cristaux dont le diamètre est de quelques centimètres. Ce profil crée alors une lentille thermique purge dont la focale $f_{th}$ s'exprime selon la formule classique [Thermal Lensing in Nd :YAG laser Rod, Koechner, Applied Optics, Nov 1970, Vol 9, N°11]:

$$fth = \frac{2\pi.r^2.\lambda}{p_T \left[ \dfrac{dn}{dT} \right]}$$

avec r rayon du faisceau de pompe ;

λ longueur d'onde du faisceau laser amplifié
$p_T$ puissance thermique déposée dans le cristal ;

$\dfrac{dn}{dT}$ gradient d'indice du matériau en fonction de la température.

Typiquement, les lentilles thermiques ont des focales de quelques dizaines de centimètres à quelques dizaines de métrées.

Dans ce cas, on démontre que les variations de phase résiduelles du faisceau laser amplifié, après correction de la focale, sont très faibles comme illustré en figure 11 où sont représentés le long de l'axe y du cristal les variations de phase φ du faisceau laser. Typiquement, on obtient ainsi de très bons rapports de Strehl, supérieurs à 0.99.

Il est à noter également que cette configuration est assez peu sensible aux micro-modulations d'énergie qui induisent de faibles modulations du profil de température parabolique et dégradent faiblement la qualité du faisceau amplifié. Ainsi, des modulations de l'énergie de 10% permettent d'obtenir encore des rapports de Strehl supérieurs à 0.98.

Lorsque le faisceau de pompage n'est plus homogène, le profil de température n'est plus parabolique. La variation d'indice induite par le profil de température crée des différences de trajet optique W(r) sous la forme :

$$W(r) = n_o.\ell + \frac{dn}{dT}\bigg|_T \int_0^{\ell} T(r,x)dx$$

avec

$n_o$ indice optique moyen du cristal ;

l : longueur du cristal

T (r, x) : répartition de le température selon un premier axe x qui est l'axe de symétrie du cristal et un second axe r radial perpendiculaire à l'axe x.

La déformation du front d'onde WFE(r) est donnée par l'expression :

$$WFE(r) = \frac{W(r) - W(o)}{\lambda}$$

avec W(o) : trajet au centre du barreau ;

W(r) : trajet axial au rayon r.

[Liquid Nitrogen cooled Ti :Sa Laser, Schulz, IEEE Journal of Quantum electronics, April 1991, Vol 27, N°4]

La dégradation du rapport de Strehl RS induite est alors estimée par l'approximation de Maréchal [Principles of optics, Born & Wolf, Oxford, Pergamon, 1975, pp 460-464]. Elle vaut :

$$RS = e^{-(2\pi WFE_{rms})^2}$$

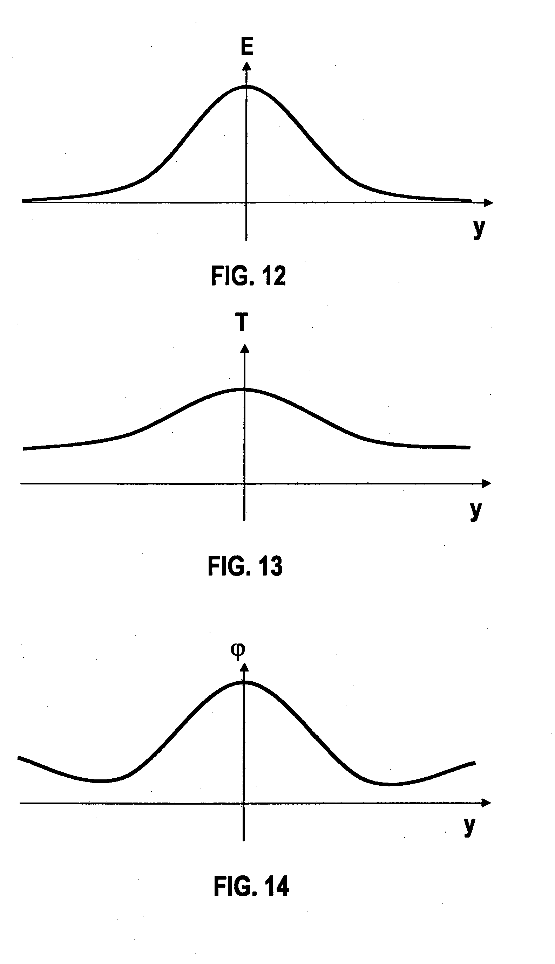

Les figures 12, 13 et 14 montrent les variations du profil de la répartition d'énergie E du faisceau de pompe, de la variation de température à l'intérieur du cristal et de la variation de phase lorsque la répartition d'énergie E n'est plus constante, mais gaussienne. On constate que les variations de phase telles que figurées sur la figure 14 sont nettement supérieures à celles figurées sur la figure 11. le rapport de Strehl n'est plus que de 0.5, insuffisant pour assurer une propagation correcte des faisceaux.

L'utilisation d'un cristal à symétrie radiale permet également une répartition radiale des contraintes, diminuant ainsi les contraintes sur la structure.

**Revendications**

1. Dispositif d'amplification de faisceau laser comprenant au moins un amplificateur et un dispositif de pompage optique,
l'amplificateur (1) de faisceau laser comprenant un cristal amplificateur (11) et des moyens de refroidissement du cristal (12, 13, 14),

   - le cristal (11) ayant la forme d'un cylindre droit comprenant une face d'entrée (110) et une face de sortie (111) de forme circulaire et une surface cylindrique (112) reliant lesdites faces, le faisceau laser amplifié circulant entre lesdites faces ;
   - les moyens de refroidissement comprenant un liquide de refroidissement au contact au moins de l'intégralité de ladite surface cylindrique ;
   **Caractérisé en ce que**
   - l'indice optique du liquide de refroidissement est voisin de celui du cristal, de façon à réaliser une adaptation d'indice entre le liquide de refroidissement et le cristal ;
   - le dispositif de pompage optique comprend deux faisceaux laser de pompe opposés (3) traversant le cristal amplificateur (11) de façon longitudinale, de façon que, à l'intérieur du cristal, la répartition d'énergie à l'intérieur des faisceaux lasers de pompe est sensiblement constante.

2. Dispositif d'amplification de faisceau laser selon la revendication 1, **caractérisé en ce que** les moyens de refroidissement comprennent une enceinte mécanique (13) entourant le cristal (11), un liquide de refroidissement (12) disposé entre le cristal (11) et l'enceinte mécanique (13) de façon que l'intégralité de la surface cylindrique (112) baigne dans le liquide de refroidissement et des moyens (14) permettant la circulation dudit liquide de refroidissement (12) dans l'enceinte mécanique (13).

3. Dispositif d'amplification de faisceau laser selon la revendication 1, **caractérisé en ce que** le liquide de refroidissement est de l'eau mélangée à un additif, de type éthylène-glycol.

4. Dispositif d'amplification de faisceau selon la revendication 1, **caractérisé en ce que** le cristal est à base de Titane et de Saphir.

**Patentansprüche**

1. Einrichtung zum Verstärken eines Laserstrahls, die mindestens einen Verstärker und eine optische Pumpvorrichtung umfasst,
wobei der Verstärker (1) des Laserstrahls einen Verstärkungskristall (11) und Kühlmittel des Kristalls (12, 13, 14) umfasst,

   - wobei der Kristall (11) die Form eines geraden Zylinders hat, der eine Eingangsseite (110) und eine Ausgangsseite (111) kreisrunder Form und eine zylindrische Fläche (112) hat, die die Seiten verbindet, wobei der verstärkte Laserstrahl zwischen den Seiten zirkuliert,
   - wobei die Kühlmittel eine Kühlflüssigkeit im Kontakt mit mindestens der gesamten zylindrischen Fläche umfassen,

   **dadurch gekennzeichnet, dass**

   - der optische Index der Kühlflüssigkeit in etwa dem des Kristalls entspricht, so dass eine Indexanpassung zwischen der Kühlflüssigkeit und dem Kristall erfolgt,
- die optische Pumpvorrichtung zwei gegenüberliegende Pumplaserstrahlen (3) umfasst, die den Verstärkungskristall (11) längs durchqueren, so dass im Kristall die Energieverteilung innerhalb der Pumplaserstrahlen im Wesentlichen konstant ist.

**2.** Einrichtung zum Verstärken eines Laserstrahls nach Anspruch 1, **dadurch gekennzeichnet, dass** die Kühlmittel einen mechanischen Behälter (13), der den Kristall (11) umgibt, eine Kühlflüssigkeit (12), die zwischen dem Kristall (11) und dem mechanischen Behälter (13) derart angeordnet ist, dass die gesamte zylindrische Fläche (112) in der Kühlflüssigkeit badet und Mittel (14) umfassen, die die Zirkulation der Kühlflüssigkeit (12) in dem mechanischen Behälter (13) gestatten.

**3.** Einrichtung zum Verstärken eines Laserstrahls nach Anspruch 1, **dadurch gekennzeichnet, dass** die Kühlflüssigkeit mit einem Zusatzstoff von Typ Ethylenglycol gemischtes Wasser ist.

**4.** Einrichtung zum Verstärken eines Laserstrahls nach Anspruch 1, **dadurch gekennzeichnet, dass** der Kristall auf der Basis von Titan und von Saphir ist.

**Claims**

**1.** A laser beam amplification device comprising at least one amplifier and one optical pumping device, said laser beam amplifier (1) comprising a crystal amplifier (11) and crystal cooling means (12, 13, 14),

- said crystal (11) being in the shape of a straight cylinder comprising an inlet face (110) and an outlet face (111) of circular shape and a cylindrical surface (112) connecting said faces, the amplified laser beam circulating between said faces;
- said cooling means comprising a cooling fluid at least in contact with the whole of said cylindrical surface;

**characterised in that**:

- the optical index of said cooling fluid is close to that of the crystal so as to carry out index matching between said cooling fluid and said crystal;
- said optical pumping device comprises two opposing pumped laser beams (3) passing through said amplifying crystal (11) in a longitudinal manner so that, inside said crystal, the distribution of energy inside the pumped laser beams is substantially constant.

**2.** The laser beam amplification device according to claim 1, **characterised in that** said cooling means comprise a mechanical enclosure (13) surrounding said crystal (11), a cooling fluid (12) disposed between said crystal (11) and said mechanical enclosure (13) so that all of the cylindrical surface (112) is submerged in the cooling fluid and means (14) enabling the circulation of said cooling fluid (12) inside said mechanical enclosure (13).

**3.** The laser beam amplification device according to claim 1, **characterised in that** said cooling fluid is water mixed with an additive of the ethylene-glycol type.

**4.** The beam amplification device according to claim 1, **characterised in that** said crystal is a titanium and sapphire based crystal.

**FIG. 1**

A

14

12

13

111

11

x

1

112

110

O

**FIG. 2**

A

z

13

12

11

y

112

O

**FIG. 3**

**Coupe AA**

**FIG. 4**

FIG. 5

FIG. 6

FIG. 7

FIG. 8

E

FIG. 9

T

FIG. 10

φ

FIG. 11

**FIG. 12**

**FIG. 13**

**FIG. 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SCHULZ.** Liquid Nitrogen Cooled Ti/Sa Laser. *IEEE Journal of Quantum Electronics,* Avril 1991, vol. 27 (4
- **PATTERSON ; BONLIE ; PRICE ; WHITE.** Suppression of parasitic lasing in large aperture Ti :Sapphire laser amplifiers. *Optics letters,* 15 Juillet 1999, vol. 24 (14
- **CAMILLE BIBEAU et al.** *IEEE Journal of Quantum Electronics,* Octobre 1998, vol. 34 (10

- **KOECHNER.** Thermal Lensing in Nd :YAG laser Rod. *Applied Optics,* Novembre 1970, vol. 9 (11
- **SCHULZ.** Liquid Nitrogen cooled Ti :Sa Laser. *IEEE Journal of Quantum electronics,* Avril 1991, vol. 27 (4
- **BORN ; WOLF.** Principles of optics. Pergamon, 1975, 460-464